# EUROPÄISCHE PATENTSCHRIFT

(11) **EP 0 894 679 B1**
(45) Veröffentlichungstag und Bekanntmachung des Hinweises auf die Patenterteilung: **13.08.2003**
(21) Anmeldenummer: 98111933.2
(22) Anmeldetag: 27.06.1998
(51) Int. Cl.: B60R 21/20

(54) **Säulenverkleidung für Säulen von Kraftfahrzeugen mit neuen Materialien**
Pillar garnish for motor vehicle pillars utilizing new materials
Habillage de montants pour montants de véhicules automobiles utilisant des matériaux nouveaux

(30) Priorität: 31.07.1997 DE 19733083; 06.09.1997 DE 19739107
(43) Veröffentlichungstag der Anmeldung: 03.02.1999
(73) Patentinhaber: IBS Brocke GmbH & Co. KG, 51597 Morsbach (DE)
(72) Erfinder: Mischke, Jürgen, Dr., 58097 Hagen (DE); Mirth, Willi, 51597 Morsbach-Lichtenberg (DE); Hermes, Günter, 51545 Waldbröl (DE)
(74) Vertreter: Godemeyer, Thomas, Dr.

(56) Entgegenhaltungen:
- DE-A- 19 647 679
- GB-A- 2 261 636

## Beschreibung

Die Erfindung betrifft eine Säulenverkleidung für Säulen von Kraftfahrzeugen mit oder ohne integrierten Seitenairbag bestehend aus mindestens einem öffnungsbereich A und mindestens einem Befestigungsbereich B.

In neuerer Zeit wurden von der Automobilindustrie zusätzlich zu den bisherigen Insassenrückhaltesystemen wie Sicherheitsgurt und Kopfstützen auch aufblasbare Insassenrückhaltesysteme, die sich bei oder vor einem Aufprall entfalten, entwikkelt. Diese Rückhaltesysteme werden im allgemeinen als "Airbags" bezeichnet. Diese können an verschiedenen Bereichen im Fahrzeuginnenraum angeordnet sein. Üblicherweise befinden sie sich im Frontbereich des Kraftfahrzeuges, beispielsweise im Lenkrad oder im vorderen Armaturenbrett auf der Beifahrerseite. Zusätzliche Rückhaltesysteme, die sogenannten Seitenairbags wurden entwickelt. Diese werden entweder im Lehnenbereich der Sitze des Fahrzeugs oder in den seitlichen, innenliegenden Verkleidungen des Fahrzeugs, beispielsweise in der Türverkleidung oder in der Seitenverkleidung integriert. Diese Systeme werden ebenfalls während oder kurz vor einem entsprechenden Aufprall ausgelöst und stellen zusammen mit den Frontrückhaltesystemen im Armaturenbrett bzw. im Lenkrad der Fahrzeuge eine erhebliche Verbesserung der Sicherheit für die Fahrzeuginsassen dar.

Beim explosionsartigen Aufblasen der Rückhaltesysteme werden erhebliche Kräfte frei. Es ist daher notwendig, bestimmte Teile des Fahrzeuginnenbereichs so zu gestalten, daß es möglichst nicht zu einem Zersplittern oder Abreißen dieser Fahrzeugteile beim Auslösen des Airbags kommt. Derartige umherfliegende Splitter oder Teile würden nämlich die Verletzungsgefahr für die Insassen wieder erhöhen und könnten zusätzlich auch die Wirksamkeit der aufblasbaren Rückhaltesysteme gefährden. So könnte es beispielsweise durch die Splitter zum Zerschneiden der entsprechenden Airbags kommen, so daß diese sich nicht mit ihrer vollen Funktionsfähigkeit entfalten können.

Der Innenraum von Fahrzeugen enthält im allgemeinen mehrere Säulenverkleidungen, die die Karosseriesäulen, bezeichnet als A-Säule, B-Säule und C-Säule, abdecken. Um die oben genannten Gefahren möglichst zu minimieren, ist es daher erforderlich, derartige Säulenverkleidungen in ihrer mechanischen Belastbarkeit so zu verbessern, daß sie für integrierte Seitenaufprallsysteme oder auch für einen Aufprall eines Airbags von außen, beispielsweise eines im Sitz des Kraftfahrzeuges angeordneten Airbags, geeignet sind.

Die EP 0 872 390 A1, ein Stand der Technik gemäß Art 54(3) EPÜ beschreibt eine Säulenverkleidung die im Befestigungsbereich mit einem festen und einem weicheren thermoplastischen Material ausgestattet ist. Die Härte des Materials ist jedoch nicht näher beschrieben.

In der DE 197 04 195.7 der Anmelderin wird eine Säulenverkleidung für Säulen von Kraftfahrzeugen mit integriertem Seitenairbag vorgeschlagen. Sie besitzt einen Öffnungsbereich A und einen Befestigungsbereich B. Die Säulenverkleidung besitzt ferner im Öffnungsbereich A eine oder mehrere Scharnier- oder Knickpunkte 1 und im Befestigungsbereich B eine oder mehrere flexible Halteelemente 5, die zur Befestigung der Säulenverkleidung an der Karosseriesäule 2 dienen. Beim Auslösen des Seitenairbags erfolgt ein Umklappen im Öffnungsbereich A der Säulenverkleidung, so daß in diesem Bereich der ausgelöste Airbag austreten kann. Bei diesem oben beschriebenem Stand der Technik werden die auf die Säulenverkleidung wirkenden Kräfte durch Wanddickenreduzierungen der Säulenverkleidung bzw. vorgeformte Knick- oder Scharnierpunkte reduziert und so ein Bruch oder ein Splittern der Säulenverkleidung vermieden.

Die für die Säulenverkleidung des Standes der Technik verwendeten Materialien bestehen überwiegend aus harten thermopla-stischen Polymeren, wie Polypropylen, Acryl-Butadien-Styrol-Copolymer oder Acryl-Butadien-Styrol-Polycarbonat-Copolymer. Die Polymere können weiterhin auch mit Füllstoffen gefüllt sein. Ein Nachteil der Verwendung dieser relativ harten Polymere ist die Gefahr des Brechens oder Reißens der Säulenverkleidung beim Auslösen des Airbags. Dies kann insbesondere auch dann auftreten, wenn durch Wanddickenreduzierungen der Säulenverkleidung bzw. Knick- oder Scharnierpunkte die auf die Säulenverkleidung wirkenden Kräfte reduziert werden und quasi Sollbruch- bzw. Sollknickpunkte vorgeformt werden. Diese Maßnahmen schließen somit die Gefahr des Brechens oder Reißens der Säulenverkleidung beim Auslösen des Airbags nicht vollständig aus.

Die vorliegenden Erfindung hat daher die technische Aufgabe, eine weitere Verbesserung der oben beschriebenen Säulenverkleidung zu erreichen durch weitere Maßnahmen zur Verringerung der Bruchgefahr oder zur Verhinderung des Abreißens oder Splitterns der Säulenverkleidung.

Diese Aufgabe wird gelöst, indem die Säulenverkleidung in ihrer Zusammensetzung aus thermoplastischem Kunststoff unterschiedlicher Härten besteht. So ist die erfindungsgemäße Säulenverkleidung dadurch gekennzeichnet, daß der Öffnungsbereich A aus einem thermoplastischen Kunststoff mit einer Shore-A-Härte von 30 bis 90, vorzugsweise von 60 bis 80 besteht und der Befestigungsbereich B aus einem thermoplastischen Kunststoff mit einer Shore-A-Härte von > 100 besteht. Als thermoplastischer Kunststoff wird im Befestigungsbereich B in bevorzugter Weise ein Kunststoff ausgewählt aus der Gruppe Polypropylen, Acryl-Butadien-Styrol-Copolymer oder Acryl-Butadien-Styrol-Polycarbonat-Copolymer eingesetzt. Für den Öffnungsbereich A wird in besonders bevorzugter Weise ein thermoplastisches Polymer ausgewählt aus der Gruppe EPM, EPDM, PP-EPDM eingesetzt. Bei diesen Polymeren handelt es sich um Produkte, die bei der Vulkanisation von Copolymeren aus Ethylen und Propylen anfallen. Es sind Polymere mit kautschukartigem Charakter, die für diese Zwecke auch hervorragende mechanische Eigenschaften besitzen.

EPM ist ein Ethylen-Propylen-Kautschuk mit einem Ethylengehalt von 40 bis 75 Gew.% und EPDM ein Terpolymer aus Ethylen, Propylen und einem nicht konjugierten Dien mit einem Ethylen- bzw. Diengehalt von 40 bis 90 Gew.%. Diese EPDM-Kautschuke können auch als Copolymer mit Polypropylen eingesetzt werden.

Die erfindungsgemäße Säulenverkleidung wird hergestellt, indem zunächst in üblicher Weise eine Dekorschicht mit einer dünnen Haut aus dem weichen thermoplastischen Polymer mit einer Shore-A-Härte von 30 bis 90 hinterspritzt bzw. hinterpreßt wird. Dies ist notwendig, um dem Stoff bzw. der Folie die benötigte Grundkontur mitzugeben. In einem zweiten Verfahrensschritt wird dann der härtere Träger mit weiteren Funktionselementen im Befestigungsbereich B hinterspritzt bzw. hinterpreßt. Das Hinterspritzen kann beispielsweise in einem Dreh- oder Umsetzwerkzeug durchgeführt werden.

Die so hergestellte Säulenverkleidung besitzt den Vorteil, daß die benötigten Öffnungskräfte erheblich reduziert werden und die Gefahr des Abreißens dieser Bereiche vermieden wird. Diese Problematik tritt noch verstärkt bei niedrigen Temperaturen, insbesondere im Bereich von -20 bis -40° C auf. Auch in diesen Temperaturbereichen wird die Gefahr des Abreißens oder des Splitterns der Säulenverkleidung bei Einsatz der erfindungsgemäßen thermoplastischen Materialien erheblich verringert.

Ein weiterer Vorteil der erfindungsgemäßen Säulenverkleidung ergibt sich aber auch dann, wenn sie nicht über einen integrierten Airbag verfügt, sondern der Airbag beispielsweise im Sitz integriert ist. Beim Auslösen des Airbags trifft dieser dann auf die Säulenverkleidung, beispielsweise die B-Säule in der Mitte des Innenraumes des Fahrzeuges auf. Üblicherweise bestehen diese Säulen als tragende Karosseriebestandteile aus harten Materialien. Es besteht die Gefahr, daß die Säulenverkleidung gegen die Säulen gedrückt wird, bricht oder zersplittert, und die Bruchstücke den auftreffenden Airbag zerschneiden. Damit ist die ausreichende Funktionsfähigkeit des Airbags gefährdet.

Bei der erfindungsgemäßen Säulenverkleidung können sich diese durch die weicheren Bereiche beim Auftreffen des Airbags leichter verformen. Die Bruchgefahr ist erheblich reduziert und somit auch die Gefahr der Airbag-Beschädigung. Ein weiterer Vorteil besitzt die erfindungsgemäße Säulenverkleidung durch ein besseres Akustikverhalten, denn durch die zusätzlichen Komponenten aus weichen thermoplastischen Materialien, die überwiegend in den Anlagebereichen zur Karosserie angebracht werden, werden die Säulenverkleidungen von der Karosserie akustisch entkoppelt. Die erfindungsgemäßen Säulenverkleidungen besitzen damit zusätzlich einen geräuschdämpfenden Effekt.

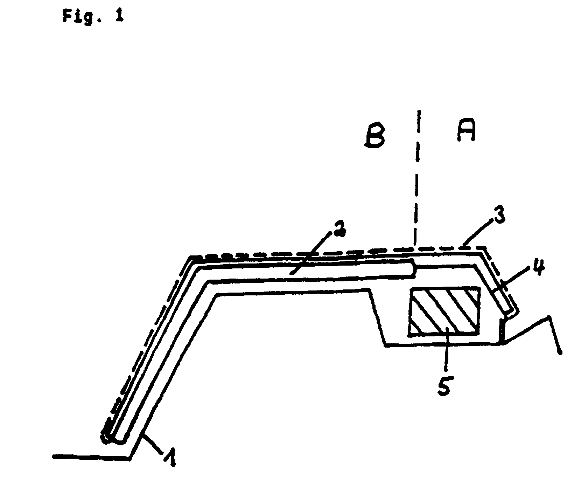

Figur 1 beschreibt eine Ansicht einer erfindungsgemäßen Säulenverkleidung im Querschnitt mit integriertem Seitenairbag.

In Figur 1 bezeichnet die Ziffer 1 das Blech des Kraftfahrzeugs, die Ziffer 2 das harte thermoplastische Material im Befestigungsbereich B mit einer Shore-A-Härte > 100. Die Ziffer 4 bezeichnet die weiche thermoplastische Komponente mit Knick- bzw. Scharnierpunkten (nicht gezeigt) zum Aufklappen im öffnungsbereich A. Dieser thermoplastische Kunststoff besitzt eine Shore-A-Härte von 30 bis 90. Mit der Ziffer 3 wird die Dekorschicht beschrieben. Hierbei kann es sich um eine Stoffschicht oder um eine entsprechende Dekorfolie handeln. Hiermit wird aus optischen Gründen das Kunststoffteil abgedeckt. Die Ziffer 5 beschreibt den Airbag in nicht entfalteter Form.

Mit der erfindungsgemäßen Säulenverkleidung wird im Unterschied zum bisherigen Stand der Technik erstmals eine Ausführung zur Verfügung gestellt, die nicht mit Hilfe von mechanischen Sollbruchstellen oder Knickkanten, sondern durch ihren polymeren Aufbau einen Bruch oder ein Splittern der Säulenverkleidung vorteilhaft vermeidet. Es versteht sich von selbst, daß die erfindungsgemäß geschilderten polymeren Werkstoffe auch bei Säulenverkleidungen eingesetzt werden können, die zusätzlich über entsprechende mechanische Knick- oder Scharnierpunkte bzw. Wanddickenreduzierungen verfügen.

## Patentansprüche

1. Säulenverkleidung für Säulen von Kraftfahrzeugen bestehend aus mindestens einem Öffnungsbereich A und mindestens einem Befestigungsbereich B, **dadurch gekennzeichnet, dass** der Öffnungsbereich A aus einem thermoplastischen Kunststoff mit einer Shore-A-Härte von 30 bis 90 besteht und daß der Befestigungsbereich aus einem thermoplastischer Kunststoff mit einer Shore-A-Härte von > 100 besteht.

2. Säulenverkleidung nach Anspruch 1, **dadurch gekennzeichnet, daß** in der Säulenverkleidung ein Seitenairbag angeordnet ist.

3. Säulenverkleidung nach Anspruch 1 oder Anspruch 2, **dadurch gekennzeichnet, daß** für den Öffnungsbereich A ein thermoplastischer Kunststoff mit einer Shore-A-Härte von 60 bis 80 eingesetzt wird.

4. Säulenverkleidung nach den Ansprüchen 1 bis 3, **dadurch gekennzeichnet, daß** der Befestigungsbereich B aus einem thermoplastischen Kunststoff ausgewählt aus der Gruppe Polypropylen, Acryl-Butadien-Styrol-Copolymer oder Acryl-Butadien-Styrol-Polycarbonat-Copolymer besteht.

5. Säulenverkleidung nach Ansprüchen 1 bis 4, **dadurch gekennzeichnet, dass** der Öffnungsbereich A aus einem thermoplastischen Polymer ausgewählt aus der Gruppe PP-EPDM, EPM, EPDM besteht.

## Claims

1. A pillar garnish for pillars of motor vehicles, consisting of at least one opening region A and at least one fixing region B, **characterized in that** the opening region A is made of a thermoplastic material having a Shore A hardness of from 30 to 90, and that the fixing region B is made of a thermoplastic material having a Shore A hardness of >100.

2. The pillar garnish according to claim 1, **characterized in that** the pillar garnish has a lateral air bag arranged therein.

3. The pillar garnish according to claim 1 or 2, **characterized in that** a thermoplastic material having a Shore A hardness of from 60 to 80 is used for opening region A.

4. The pillar garnish according to claims 1 to 3, **characterized in that** the fixing region B is made of a thermoplastic material selected from the group of polypropylene, acrylic-butadiene-styrene copolymer or acrylic-butadiene-styrene-polycarbonate copolymer.

5. The pillar garnish according to claims 1 to 4, **characterized in that** the opening region A is made of a thermoplastic polymer selected from the group of PP-EPDM, EPM, EPDM.

## Revendications

1. Habillage de montants pour montants de véhicules automobiles se composant d'au moins une zone d'ouverture A et d'au moins une zone de fixation B, **caractérisé par le fait que** la zone d'ouverture A se compose d'une matière synthétique thermoplastique avec une dureté Shore A comprise entre 30 et 90 et que la zone de fixation B se compose d'une matière synthétique thermoplastique avec une dureté Shore A de > 100.

2. Habillage de montants selon la revendication 1, **caractérisé par le fait qu'**un airbag latéral est disposé dans l'habillage de montant.

3. Habillage de montants selon la revendication 1 ou la revendication 2, **caractérisé par le fait que** l'on utilise pour la zone d'ouverture A une matière synthétique thermoplastique avec une dureté Shore A comprise entre 60 et 80.

4. Habillage de montants selon les revendications 1 à 3, **caractérisé par le fait que** la zone de fixation B se compose d'une matière synthétique thermoplastique choisie dans le groupe comprenant le polypropylène, le copolymère acrylbutadiène-styrène ou le copolymère acryl-butadiène-styrène-polycarbonate.

5. Habillage de montants selon les revendications 1 à 4, **caractérisé par le fait que** la zone d'ouverture A se compose d'un polymère thermoplastique choisi dans le groupe PP-EPDM, EPM, EPDM.
